# EUROPÄISCHE PATENTSCHRIFT

(11) **EP 0 996 208 B1**
(45) Veröffentlichungstag und Bekanntmachung des Hinweises auf die Patenterteilung: **27.06.2001**
(21) Anmeldenummer: 98115457.8
(22) Anmeldetag: 17.08.1998
(51) Int. Cl.: H02G 3/30, H02G 1/00

(54) **Positioniervorrichtung zum Positionieren eines Kabels, Schlauches oder dergleichen in einem Hohlraum**
Positionning device for a cable, a tubing or similar in an hollow space
Dispositif de positionnement d'un cable, tube ou similaire dans un espace creux

(43) Veröffentlichungstag der Anmeldung: 26.04.2000
(73) Patentinhaber: Wintersteiger, Herbert, 84544 Aschau am Inn (DE)
(72) Erfinder: Wintersteiger, Herbert, 84544 Aschau am Inn (DE)
(74) Vertreter: Grünecker, Kinkeldey, Stockmair & Schwanhäusser Anwaltssozietät

(56) Entgegenhaltungen:
- EP-A- 0 778 376
- US-A- 5 146 720

## Beschreibung

Die vorliegende Erfindung betrifft eine Positioniervorrichtung zum Positionieren zumindest eines Kabels, Schlauches, Rohres oder dergleichen in einem Hohlraum, insbesondere in einer Hohlwand oder Hohldecke, nach dem Oberbegriff des Anspruches 1.

In Gebäuden werden im Trockenbau Wände oder Decken eingezogen, die hier als Hohlwände oder Hohldecken (abgehängte Decken) bezeichnet werden. Dabei besteht eine derartige Hohlwand aus einer ersten Platte und einer zweiten Platte, die im Abstand von der ersten Platte positioniert wird. Zwischen diesen Platten befindet sich ein Hohlraum, in dem beispielsweise elektrische Leitungen, Wasserleitungen oder andere Versorgungs- bzw. Entsorgungsleitungen geführt sind. Elektrische Kabel sowie einige Varianten der Versorgungs- und Entsorgungsleitungen sind dabei flexibel ausgebildet, um ein einfaches Verlegen derselben zu ermöglichen.

Eine Positioniervorrichtung für elekrische Kabel in Hohlwänden ist aus der EP 0778 276 A1 bekannt Hierbei wird ein im Profil Doppel-T-förmiges Abstandsteil, das Ausnehmungen für die Kabelführung aufweist, zwischen die Panele der Hohlwand geklemmt.

Beim Aufstellen einer Hohlwand wird zunächst die erste Platte an den entsprechenden Tragelementen befestigt Danach werden beispielsweise Elektrokabel oder flexible Wasserleitungen eingesetzt und der Hohlraum wird durch die zweite Platte unter Bildung der Hohlwand geschlossen. Wird nun eine Isolierung in Form von Isoliermaterial in den Hohlraum zwischen den Platten eingebracht, so besteht die Gefahr, daß sich die flexiblen Kabel, Schläuche oder Leitungen verlagern.

Zur Installation entsprechender Anschlüsse, z.B. Steckdosen oder Wasseranschlüsse, ist es notwendig, an der gewünschten Stelle mit einem Hohlwandfräser eine Öffnung in die Wand zu schneiden, um darauf den entsprechenden Anschluß zu setzen und an die entsprechende Leitung anzuschließen. Wenn sich das Kabel oder die Leitung durch das Einfüllen einer Isolierung verlagert haben, wird es schwierig, an der gewünschten Stelle das entsprechende Kabel oder die entsprechende Leitung zu finden. Ist es zu einer größeren Verlagerung des Kabels oder der Leitung gekommen, so ist es oftmals notwendig, die Öffnung in der Wand zu vergrößern, um das Kabel zu finden und an die entsprechende Stelle zu führen. Dies bedeutet jedoch einen erhöhten Arbeits- und Materialaufwand, da die Wand danach wieder verschlossen werden muß.

Es ist daher Aufgabe der vorliegenden Erfindung eine Positioniervorrichtung der eingangs genannten Art zu verbessern, derart, daß das Auffinden eines provisorisch eingebrachten Kabels, Schlauches, Rohres oder dergleichen in einer Hohlwand oder Hohldecke erleichtert wird.

Diese Aufgabe wird erfindungsgemäß gelöst durch eine Positioniervorrichtung der eingangs genannten Art, die einen Befestigungsabschnitt für eine Befestigung der Positioniervorrichtung an einer Innenseite des Hohlraumes aufweist.

Dadurch wird es auf vorteilhafte Weise möglich, ein Kabel oder ein Rohr in einem Bereich zu positionieren, in dem später ein Anschluß wie z.B. eine Steckdose oder ein Wasseranschluß vorgesehen sind.

Bevorzugte Weiterbildungen des Erfindungsgegenstandes sind in den Unteransprüchen dargelegt.

Nachfolgend wird die vorliegende Erfindung anhand von Ausführungsbeispielen mit Bezug auf die beigefügten Zeichnungen näher erläutert In den Zeichnungen zeigen:
- Fig. 1: eine Vorderansicht, eine Seitenansicht und eine Draufsicht einer Positioniervorrichtung gemäß einem ersten Ausführungsbeispiel,
- Fig. 2: eine Vorderansicht, eine Seitenansicht und eine Draufsicht einer Positioniervorrichtung gemäß eines zweiten Ausführungsbeispiels, das ähnlich dem ersten Ausführungsbeispiel ist,
- Fig. 3: eine Hohlwand mit der Positioniervorrichtung gemäß dem ersten oder zweiten Ausführungsbeispiel,
- Fig. 4a: die Vorderansicht eines dritten Ausführungsbeispiels, und
- Fig.4b: die Vorderansicht eines vierten Ausführungsbeispiels, das ähnlich dem dritten Ausführungsbeispiel ist,
- Fig. 5: eine Hohlwand mit einer Positioniervorrichtung gemäß dem dritten oder vierten Ausführungsbeispiel, und
- Fig. 6: eine Hohlwand oder eine abgehängte Decke mit einer Positioniervorrichtung gemäß eines fünften Ausführungsbeispiels, das im wesentlichen eine erweiterte Ausführungsform des ersten oder zweiten Ausführungsbeispiels ist.

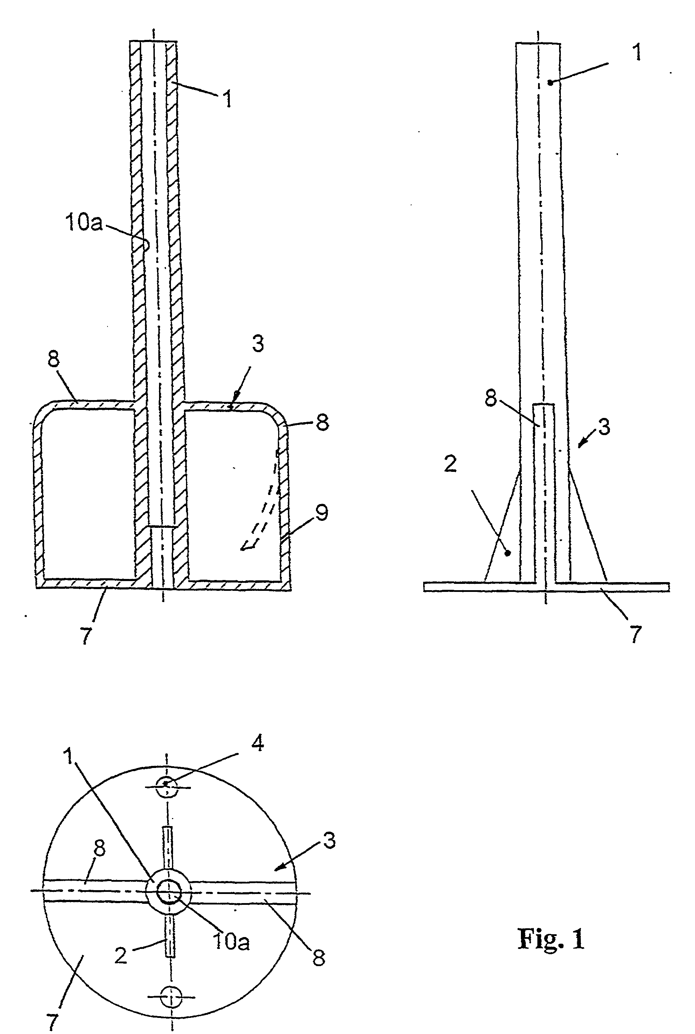

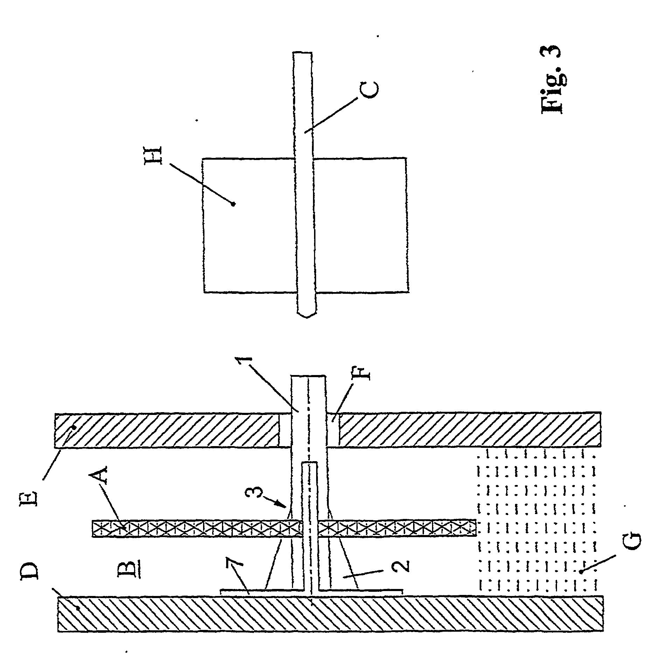

Wie in Fig.1 gezeigt, weist die Positioniervorrichtung zum Positionieren zumindest eines Kabels A oder z.B. eines flexiblen Schlauches oder eines Rohres in einer Hohlwand oder Hohldecke aus einem Befestigungsabschnitt 7 und einer Haltevorrichtung 3 auf. Ein rohflörrniger Zentrierabschnitt 1 ist an dem Befestigungsabschnitt 7 vorgesehen und erstreckt sich im wesentlichen senkrecht zu diesem. Wie aus der Fig.1 ersichtlich, ist der Befestigungsabschnitt 7 im scheibenförmig ausgebildet, wobei eine Außenfläche des Befestigungsabschnitts 7 zur Befestigung an einer Innenseite der ersten Platte D vorgesehen ist, wie dies beispielsweise in Fig.3 gezeigt ist. Der Befestigungsabschnitt 7 wird beispielsweise an der Innenseite der ersten Platte D festgeklebt Dazu ist entweder eine entsprechende Klebeschicht auf dem Befestigungsabschnitt 7 vorgesehen, oder ein Klebestoff wie beispielsweise ein Heißkleber oder ein Doppelklebeband wird entweder an der Platte oder an dem Befestigungsabschnitt 7 angebracht.

Die Haltevorrichtung 3 weist einen bogenförmigen Steg 8 auf, der sich von dem Befestigungsabschnitt 7 ausgehend zu dem Zentrierabschnitt 1 erstreckt. Dabei umschließt eine Innenfläche des Stegs 8, eine Außenfläche des Zentrierabschnitts 1 und eine Außenfläche des Befestigungsabschnitts 7 den Positionierbereich, in dem das Kabel A oder das Rohr aufzunehmen sind. Der Steg 8 ist im wesentlichen senkrecht zu dem scheibenförmigen Befestigungsabschnitt 7 ausgebildet. Wie aus der Seitenansicht und der Draufsicht gemäß Fig.1 ersichtlich, sind Verstärkungsrippen 2 zwischen dem Zentrierabschnitt 1 und dem Befestigungsabschnitt 7 vorgesehen. Diese Verstärkungsrippen 2 sind um ca. 90° bezüglich des Stegs 8 versetzt. Wie aus der Fig.1 ersichtlich, weist die Positioniervorrichtung gemäß dem ersten Ausführungsbeispiel einen Positionierbereich auf, der durch einen ersten und zweiten Steg 8 bestimmt ist. Diese Stege 8 sind im wesentlichen symmetrisch bezüglich der Längsachse der Positioniervorrichtung angeordnet, wobei beispielsweise ein Steg 8 zum Halten von Elektrokabeln, und der andere, gegenüberliegende Steg 8 zur Aufnahme einer Wasser- oder Heizungsleitung verwendet werden kann.

Der rohrförmige Zentrierabschnitt 1 gemäß dem ersten Ausführungsbeispiel erstreckt sich über die Stege 8 hinaus. Dieser Zentrierabschnitt 1 weist eine Zentrierbohrung 10a auf, deren Funktion später näher erläutert wird. Die Außenfläche des Zentrierabschnitt 1s ist konisch ausgebildet und weist eine Neigung von vorzugsweise 0,5° auf.

In einer Variante des ersten Ausführungsbeispiels kann der Steg 8 eine Öffnung 9 oder eine hierzu vorbereitete Materialschwächung aufweisen, um das Zuführen des Kabels A zu erleichtern, wie dies beispielhaft in der Vorderansicht der Figur 1 gezeigt ist. Diese Öffnung 9 wird beispielsweise durch einen Schnitt durch den Steg 8 gebildet, so daß sich zwei gegenüberliegende Flächen, die unter einem vorgegebenen Winkel zur Erstreckungsrichtung des Steg 8 ausgebildet sind, miteinander in Kontakt sind, wenn die Öffnung geschlossen ist. Der Steg 8 besteht aus einem elastischen Material oder weist an entsprechender Stelle ein Gelenk auf, um so durch Verschieben eines Stegabschnitts die Öffnung 9 zu öffnen oder zu schließen. Eine derartige Öffnung 9 kann entweder in einem oder in beiden Stegen vorgesehen sein und durch einen Schnitt bei bedarf an der befestigten Positioniervorrichtung gebildet werden.

Nachfolgend wird die Verwendung der Positioniervorrichtung (als Kabelhalter) zum Positionieren eines Kabels A in dem Hohlraum B einer Hohlwand näher erläutert. Nach dem Aufstellen der Hohlwand, die einseitig mit einer ersten Platte D beplankt ist, wird die Positioniervorrichtung mittels einer Klebescheibe oder Heißkleber oder Doppelklebeband an der Innenseite dieser ersten Platte D an einer Stelle, an der eine Steckdose, ein Lichtschalter oder dgl. vorgesehen ist, angebracht. Danach wird das Kabel A durch die Öffnung, die durch den Steg 8 den Zentrierabschnitt 1 und den Befestigungsabschnitt 7 gebildet ist, durchgezogen bzw. durch die Öffnung 9 eingesetzt. Anschließend wird die Wand durch Anbringen der zweiten Platte E geschlossen. Dabei müssen im Bereich des Zentrierabschnitts 1 Löcher F in der zweiten Platte E vorgesehen sein, so daß sich der Zentrierabschnitt 1 durch die zweite Platte E nach außen erstreckt, wie dies in Fig.3 gezeigt ist. Anschließend kann beispielsweise eine Schüttisolierung G in den Hohlraum B zwischen der ersten und zweiten Platte D,E eingefüllt werden.

Um beispielsweise eine Steckdose zu setzen, wird nun eine entsprechende Montageöffnung mit einem Hohlfräser H in die zweite Platte E geschnitten. Dabei wird der Hohlfräser H (Bearbeitungswerkzeug) durch eine Zentriervorrichtung, wie beispielsweise einem Zentrierdorn C, der in die Zentrierbohrung 10a eingesetzt ist, geführt. Dabei kann die Zentrierbohrung 10a stufenförmig ausgebildet sein und eine Anschlagstufe (nicht gezeigt) aufweisen, die als Anschlag für den Zentrierdom C dient. Da das Kabel A zumindest in dem Bereich der Positioniervorrichtung durch die Haltevorrichtung 3 an der gewünschten Stelle gehalten wird, ist es anschließend relativ einfach, das Kabel A zu finden und die Steckdose entsprechend anzuschließen.

Dazu wird das Kabel A durch die Montageöffnung herausgezogen und die Positioniervorrichtung entfernt. Diese kann wiederverwendet werden oder wird weggeworfen. Um das Entfernen der Positioniervorrichtung zu erleichtern, ist der Durchmesser des scheibenförmigen Befestigungsabschnitts 7 kleiner als der Durchmesser der durch den Hohlfräser H geschnittenen Montageöffnung.

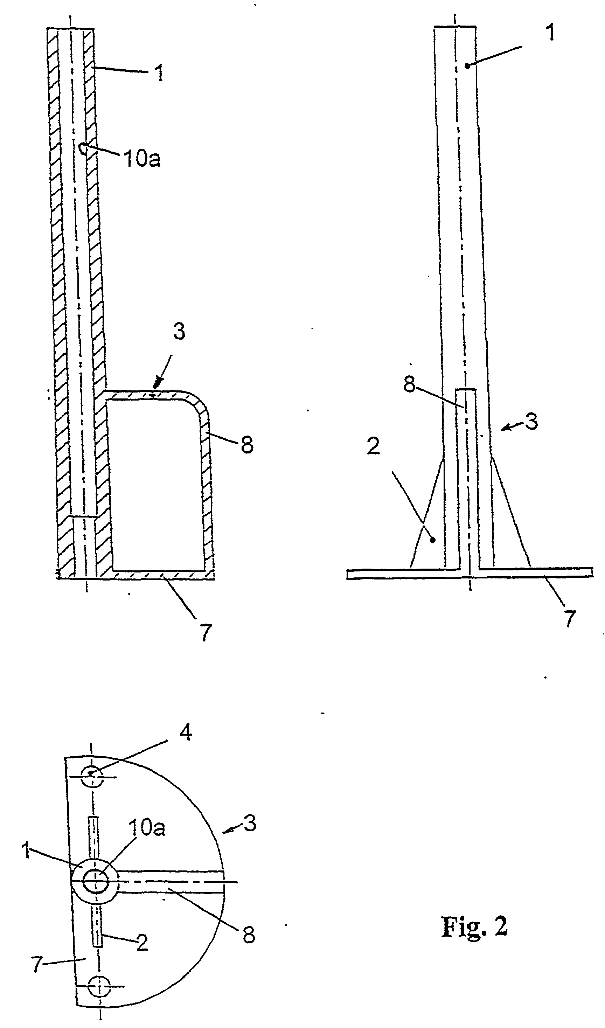

Fig.2 zeigt ein zweites Ausführungsbeispiel der Positioniervorrichtung. Dieses zweite Ausführungsbeispiel ist ähnlich dem ersten Ausführungsbeispiel, wobei jedoch nur ein Steg 8 vorgesehen ist, und der scheibenförmige Befestigungsabschnitt 7 im wesentlichen halbkreisförmig ausgebildet ist. Der Zentrierabschnitt 1 befindet sich dabei benachbart zu der geraden Kante des scheibenförmigen Befestigungsabschnitts 7. Die Positioniervorrichtung gemäß dem zweiten Ausführungsbeispiel wird wie die Positioniervorrichtung gemäß dem ersten Ausführungsbeispiel verwendet.

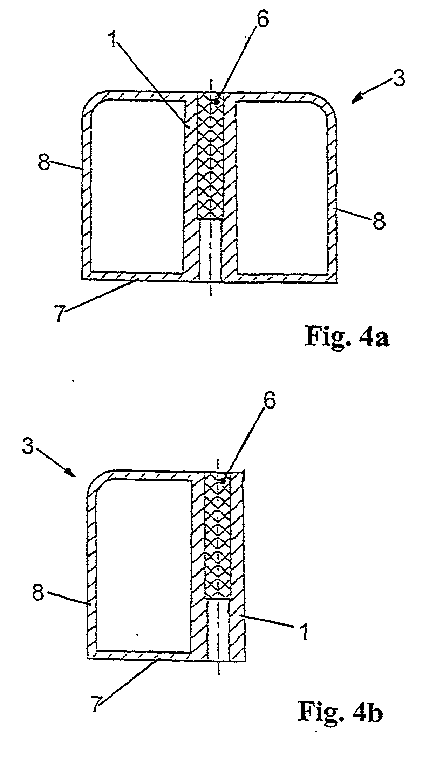

In den Fig.4a und 4b wird ein drittes und viertes Ausführungsbeispiel der Positioniervorrichtung gezeigt. Das dritte Ausführungsbeispiel gemäß Fig.4a zeigt eine Positioniervorrichtung, die im wesentlichen dem ersten Ausführungsbeispiel entspricht. Wie jedoch in Fig.4a gezeigt, erstreckt sich der Zentrierabschnitt 1 nicht über die Stege 8 hinaus. In der Bohrung des Zentrierabschnitts 1s ist ein Permanentmagnet (Detektiereinrichtung) 6 eingesetzt um, wie später erläutert, die Lage der Positioniervorrichtung zu ermitteln. Das vierte Ausführungsbeispiel gemäß Fig.4b entspricht im wesentlichen dem dritten Ausführungsbeispiel, jedoch ist ähnlich wie bei dem zweiten Ausführungsbeispiel nur ein Steg 8 vorgesehen.

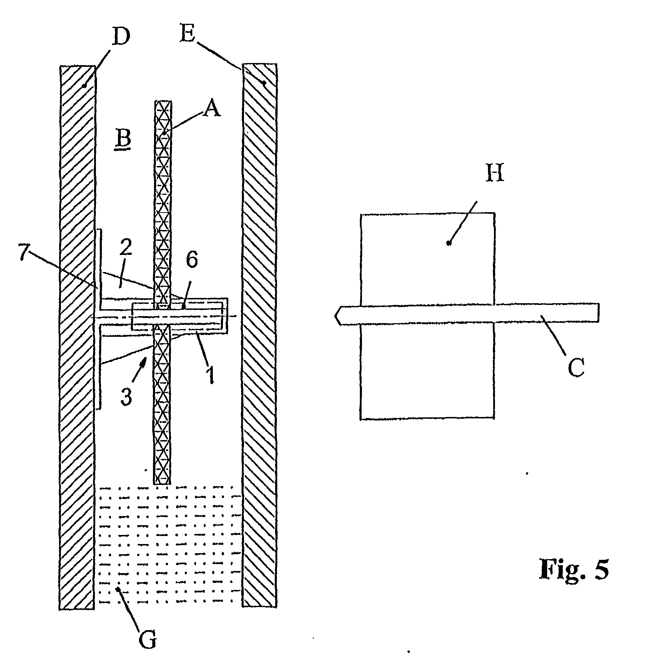

Nachfolgend wird die Verwendung des dritten oder vierten Ausführungsbeispiels als Kabelhalter mit Bezug auf Fig.5 näher erläutert. Ähnlich wie bei dem ersten und zweiten Ausführungsbeispiel wird die Positioniervorrichtung (Kabelhalter) gemäß dem dritten oder vierten Ausführungsbeispiel durch eine Klebescheibe, einen Heißkleber oder ein Doppelklebeband mit dem Befestigungsabschnitt 7 an der Innenseite der ersten Platte D angebracht. Danach wird das Kabel A durch die Öffnung, die durch den Steg 8, den Zentrierabschnitt 1 und den Befestigungsabschnitt 7 gebildet ist, durchgezogen oder alternativ durch die Öffnung 9 (wie dies in Verbindung mit Figur **1** erläutert ist) eingesetzt. Anschließend wird die Hohlwand durch die zweite Platte geschlossen.

Da der Zentrierabschnitt 1 nicht in entsprechender Weise wie bei dem ersten und zweiten Ausführungsbeispiel hervorsteht, ist es bei diesem Ausführungsbeispiel nicht notwendig, entsprechende Löcher in der zweiten Platte E vorzusehen.

Um anschließend die Stelle, an dem die Positioniervorrichtung angebracht ist, in der Wand zu finden, wird der in der Zentrierbohrung eingesetzte Permanentmagnet 6 durch ein Magnetsuchgerät oder einen Kompaß ermittelt, um an dieser Stelle mit einem Hohlwandfräser H ein entsprechendes Montageloch zu fräsen, um beispielsweise eine Steckdose zu setzen. Dazu wird nach dem Bohren des Montagelochs das Kabel A herausgezogen und die Positioniervorrichtung bei Bedarf entfernt und wiederverwendet oder weggeworfen.

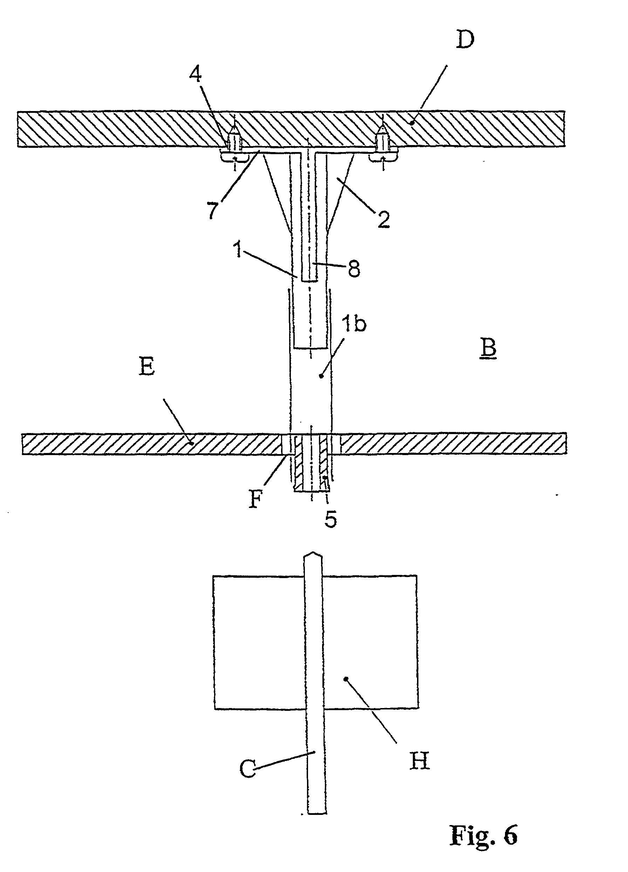

Fig.6 zeigt ein fünftes Ausführungsbeispiel der Positioniervorrichtung, die insbesondere zur Verwendung als Kabelhalter in Hohldecken bzw. abgehängten Decken vorgesehen ist. Dabei entspricht die Positioniervorrichtung im wesentlichen den in Verbindung mit Fig.1 oder 2 erläuterten Ausführungsbeispielen.

Bei abgehängten Decken ist der Abstand zwischen der Rohbetondecke D (erste Platte im Sinne der Anmeldung) und der abgehängten Decke E (zweite Platte im Sinne der Anmeldung) u.U. deutlich größer ist als der entsprechende Abstand in einer Hohlwand. Daher weist die Positioniervorrichtung gemäß dem fünften Ausführungsbeispiel einen Zentrierzwischenabschnitt 1b auf, der auf den konisch ausgebildeten Zentrierabschnitt 1 aufgesteckt wird, um den Zentrierabschnitt 1 entsprechend zu verlängern. Um eine Zentrierung des Hohlwandfräsers H zu ermöglichen, wird in den Zentrierzwischenabschnitt 1b ein Zentriereinsatz 5 eingesetzt, der eine entsprechende Zentrierbohrung 10b aufweist.

In ähnlicher Weise wie bei den vorangegangenen Ausführungsbeispielen wird bei dem fünften Ausführungsbeispiel der Befestigungsabschnitt 7 an der Rohbetondecke D befestigt. In bevorzugter Weise wird dieser an der Rohbetondecke verschraubt. Dazu sind an dem Befestigungsabschnitt 7 Befestigungsbohrungen 4 zur Aufnahme von Schrauben vorgesehen wie dies in den Fig. 1 und 6 gezeigt ist. Danach wird der Zentrierzwischenabschnitt 1b mit dem Einsatz 5 auf den Zentrierabschnitt 1 aufgesteckt und die zweite Platte E angebracht, wobei in der zweiten Platte E ein Loch vorgesehen ist, durch die sich der Zentrierzwischenabschnitt 1b erstreckt. Mittels eines Hohlwandfräsers H wird nun in bekannter Weise und geführt durch die Zentrierbohrung 10b in dem Zentriereinsatz 5 eine Montageöffnung in die zweite Platte E gefräst. Danach wird beispielsweise eine Lampe an der Decke montiert. Da in bevorzugter Weise die Positioniervorrichtung durch Schrauben relativ fest an der Decke befestigt ist, kann bei entsprechender Eignung die Lampe an der Positioniervorrichtung befestigt werden.

Sollte trotz des Zentrierzwischenabschnitts der Abstand zwischen der ersten und zweiten Platte D,E bei einer abgehängten Decke zu groß sein, daß sich der Zentrierzwischenabschnitt 1b nicht durch ein Loch in der zweiten Platte E erstrecken würde, so kann auf dieses Loch verzichtet werden und alternativ ein Permanentmagnet in den Zentriereinsatz 5 eingeschoben werden und, wie bereits in Verbindung mit dem dritten und vierten Ausführungsbeispiel läutert, die Lage der Positioniervorrichtung mittels eines Magnetsuchgeräts oder eines Kompasses bestimmt und die Montageöffnung an entsprechender Stelle gefräst werden.

Die Positioniervorrichtung (Kabelhalter) gemäß der vorgenannten Ausführungsbeispiele ist vorzugsweise einstückig aus einem elastischen Kunststoffmaterial durch Spritzguß hergestellt.

Durch die Verwendung der beschreiben Positioniervorrichtung als Kabelhalter bei der Aufstellung von Hohlwänden oder Hohldecken wird die Elektroinstallation erheblich vereinfacht und erleichtert. Insbesondere verkürzen sich die Montagezeiten und eventuelle Beschädigungen an den Hohlwänden durch die Installation werden vermieden. Durch das Anbringen der Positioniervorrichtung an der Innenseite der ersten Platte einer Hohlwand oder Hohldecke, an einer Stelle, an der Installationen wie Steckdose, Lichtschalter oder Lampen vorgesehen sind, kann dies bei der Fertigstellung der Wand oder Decke berücksichtigt werden. Insbesondere können Latten oder Profile zur Verstärkung der Wand an geeigneten Stellen verlegt werden, so daß ein Durchtrennen derselben bei der Elektroinstallation vermieden werden kann. Auf diese Weise kann der Trockenbau mit höherer Effizienz erfolgen und auch die Anordnung wandstabilisierender Montageschienen ohne Konflikt mit z. B. dem Festlegen für die Elektro- oder andere Installationen erfolgen.

Im allgemeinen dient der vorbeschriebene Halter nur zur zeitweiligen, d.h. vorläufigen Ortsfixierung eines flexiblen Stranges, wie z.B. elektrische Kabel, die an Steckdosen anzuschließen sind oder auch andere, noch endgültig zu verlegende schlauchförmige Leitungen, ohne hierauf aber beschränkt zu sein. Vielmehr kann der Halter gegebenenfalls auch zur beständigen Halterung oder Führung des Leitungsstranges, Rohres oder dergleichen herangezogen werden.

## Patentansprüche

1. Positioniervorrichtung zum Positionieren zumindest eines Kabels (A), Schlauches, Rohres oder dergleichen in einem Hohlraum (B), insbesondere einer Hohlwand oder Hohldecke, mit einer Haltevorrichtung (3) zum Halten des Kabels (A) oder des Rohrs in einem vorgegebenen Positionierbereich innerhalb des Hohlraums (B), **gekennzeichndet durch** einen Befestigungsabschnitt (7) für eine Befestigung der Positioniervorrichtung an einer Innenseite des Hohlraums (B).

2. Positioniervorrichtung nach Anspruch 1, **dadurch gekennzeichnet,** daß ein Zentrierabschnitt (1) vorgesehen ist, der sich von dem Befestigungsabschnitt (7) ausgehend erstreckt, wobei sich ein Längsachse des Zentrierabschnitts (1) senkrecht zu dem Befestigungsabschnitt (7) erstreckt.

3. Positioniervorrichtung nach Anspruch 1 oder 2, **dadurch gekennzeichnet,** daß die Haltevorrichtung (3) zumindest einen Steg (8) aufweist, der in einer Ebene senkrecht zu dem Befestigungsabschnitt (7) und von diesem ausgehend ausgebildet ist.

4. Positioniervorrichtung nach Anspruch 3, **dadurch gekennzeichnet,** daß der Steg (8) im wesentlichen bogenförmig ausgebildet ist.

5. Positioniervorrichtung nach Anspruch 3 oder 4, **dadurch gekennzeichnet,** daß eine Innenfläche des Stegs (8), eine Außenfläche des Zentrierabschnitts (1) und eine Außenfläche des Befestigungsabschnitts (7) den Positionierbereich umschließt.

6. Positioniervorrichtung nach zumindest einem der Ansprüche 3 bis 5, **dadurch gekennzeichnet,** daß der Steg (8) eine Öffnung (9) aufweist, zur Zuführung des Kabels (A) oder Rohres zum Positionierbereich.

7. Positioniervorrichtung Ansprüche 6, **dadurch gekennzeichnet,** daß die Öffnung (9) in dem Steg (8) verschließbar ausgebildet ist.

8. Positioniervorrichtung nach Anspruch 6 oder 7, **dadurch gekennzeichnet,** daß der Steg (8) einen elastischen Bereich aufweist, um die Öffnung (9) zu öffnen oder zu schließen.

9. Positioniervorrichtung nach zumindest einem der Ansprüche 6 bis 8, **dadurch gekennzeichnet,** daß die Öffnung (9) durch zwei gegenüberliegende Flächen bestimmt ist, die unter einem vorgegebenen Winkel zur Erstreckungsrichtung des Steges (8) ausgebildet sind, wobei diese Flächen in Kontakt miteinander sind, wenn die Öffnung (9) geschlossen ist.

10. Positioniervorrichtung nach zumindest einem der Ansprüche 3 bis 9, **dadurch gekennzeichnet,** daß der Befestigungsabschnitt (7), der Steg (8) und der Zentrierabschnitt (1) einstückig aus Kunststoff gebildet sind.

11. Positioniervorrichtung nach zumindest einem der Ansprüche 2 bis 10, **dadurch gekennzeichnet,** daß der Zentrierabschnitt (1) im wesentlichen rohrförmig ausgebildet ist.

12. Positioniervorrichtung nach zumindest einem der Ansprüche 2 bis 11, **dadurch gekennzeichnet,** daß der Zentrierabschnitt (1) eine Zentrierbohrung (10a) aufweist, die sich im wesentlichen senkrecht zu dem Befestigungsabschnitt (7) erstreckt zur Aufnahme einer Zentriervorrichtung (C) eines Bearbeitungswerkzeugs (H).

13. Positioniervorrichtung nach Anspruch 12, **dadurch gekennzeichnet,** daß die Zentrierbohrung (10a) stufenförmig ausgebildet ist, wobei eine Anschlagstufe zur Begrenzung einer Bewegung der Zentriervorrichtung (C) entlang der Längsachse des Zentrierabschnitts (1) vorgesehen ist.

14. Positioniervorrichtung nach zumindest einem der Ansprüche 2 bis 13, **dadurch gekennzeichnet,** daß der Zentrierabschnitt (1) konisch ausgebildet ist.

15. Positioniervorrichtung nach zumindest einem der Ansprüche 2 bis 14, **dadurch gekennzeichnet,** daß eine Außenfläche des Zentrierabschnitts (1) um ca. 0,5° zu der Längsachse geneigt ist.

16. Positioniervorrichtung nach zumindest einem der Ansprüche 2 bis 15, **dadurch gekennzeichnet,** daß der Zentrierabschnitt (1) eine Detektiereinrichtung (6) aufweist.

17. Positioniervorrichtung nach Anspruch 16, **dadurch gekennzeichnet,** daß die Detektiereinrichtung (6) ein Permanentmagnet ist.

18. Positioniervorrichtung nach Anspruch 16 oder 17, **dadurch gekennzeichnet,** daß die Detektiereinrichtung (6) in der Zentrierbohrung (10a) aufgenommen ist.

19. Positioniervorrichtung nach zumindest einem der Ansprüche 5 bis 18, **dadurch gekennzeichnet**, daß ein Zentrierzwischenabschnitt (1b) vorgesehen ist, der mit dem Zentrierabschnitt (1) verbunden ist, um den Zentrierabschnitt (1) zu verlängern.

20. Positioniervorrichtung nach Anspruch 19, **dadurch gekennzeichnet,** daß der Zentrierzwischenabschnitt (1b) rohrförmig ausgebildet ist und lösbar mit dem Zentrierabschnitt (1) verbunden ist.

21. Positioniervorrichtung nach Anspruch 20, **dadurch gekennzeichnet,** daß rohrförmige Zentrierzwischenabschnitt (1 b) eine konische Innenfläche aufweist.

22. Positioniervorrichtung nach einem der Ansprüche 19 bis 21, **dadurch gekennzeichnet,** daß der Zentrierzwischenabschnitt (1b) einen Zentriereinsatz (5) aufweist, in dem eine Zentrierbohrung (10b) ausgebildet ist.

23. Positioniervorrichtung nach Anspruch 22, **dadurch gekennzeichnet**, daß der Zentriereinsatz (5) lösbar mit dem Zentrierzwischenabschnitt (1b) verbunden ist.

24. Positioniervorrichtung nach zumindest einem der Ansprüche 1 bis 23, **dadurch gekennzeichnet,** daß die Haltevorrichtung (3) sich im wesentlichen senkrecht zu dem Befestigungsabschnitt (7) erstreckt.

25. Positioniervorrichtung nach zumindest einem der Ansprüche 2 bis 24, wobei der Hohlraum durch eine erste Platte (D) mit der Innenseite zur Befestigung des Positioniervorrichtung und durch eine zweite Platte (E) gebildet ist, die in einem vorgegebenen Abstand zur ersten Platte (D) angeordnet ist, **dadurch gekennzeichnet**, daß eine Länge des Zentrierabschnitts (1) derart gewählt ist, daß dieser sich durch eine Öffnung (F) in der zweiten Platte (E) erstreckt.

26. Positioniervorrichtung nach Anspruch 25, wobei eine Montageöffnung mit einem vorgegebenen Durchmesser in der zweiten Platte (E) ausgebildet ist, **dadurch gekennzeichnet,** daß ein Durchmesser des Befestigungsabschnitts (7) kleiner als der vorgegebene Durchmesser der Montageöffnung ist.

27. Positioniervorrichtung nach zumindest einem der Ansprüche 2 bis 26, **dadurch gekennzeichnet,** daß zumindest eine Verstärkungsrippe (2) zwischen dem Zentrierabschnitt (1) und dem Befestigungsabschnitt (7) vorgesehen ist.

28. Positioniervorrichtung nach zumindest einem der Ansprüche 1 bis 27, **dadurch gekennzeichnet,** daß der Befestigungsabschnitt (7) im wesentlichen scheibenförmig, in einer Befestigungsebene parallel zu der Innenseite des Hohlraums (B) ausgebildet ist.

29. Positioniervorrichtung nach zumindest einem der Ansprüche 1 bis 28, **dadurch gekennzeichnet,** daß eine Fläche des Befestigungsabschnitts (7) mit Klebstoff beschichtet ist.

30. Positioniervorrichtung nach zumindest einem der Ansprüche 1 bis 29, **dadurch gekennzeichnet,** daß der Befestigungsabschnitt (7) zumindest eine Befestigungsöffnung (4) zur Aufnahme einer Befestigungsschraube aufweist.

## Claims

1. Positioning device for positioning at least one cable (A), tubing, pipe or the like in a hollow space (B), particularly a cavity wall or hollow ceiling, with a holding device (3) to hold the cable (A) or the pipe in a defined positioning region within the hollow space (B), **characterized by** a fixing section (7) for a fixing of the positioning device to an inside of the hollow space (B).

2. Positioning device according to Claim 1, **characterized in that** a centring section (1) is provided which starts and extends from the fixing section (7), a longitudinal axis of the centring section (1) extending perpendicular to the fixing section (7).

3. Positioning device according to Claim 1 or 2, **characterized in that** the holding device (3) has at least one web (8) which is formed in a plane perpendicular to the fixing section (7) and starts therefrom.

4. Positioning device according to Claim 3, **characterized in that** the web (8) is substantially arc-shaped in form.

5. Positioning device according to Claim 3 or 4, **characterized in that** an inner surface of the web (8), an outer surface of the centring section (1) and an outer surface of the fixing section (7) encompasses the positioning region.

6. Positioning device according to at least one of Claims 3 to 5, **characterized in that** the web (8) has an opening (9), for feeding the cable (A) or pipe to the positioning region.

7. Positioning device according to Claim 6, **characterized in that** the opening (9) in the web (8) is formed in closable manner.

8. Positioning device according to Claim 6 or 7, **characterized in that** the web (8) has a flexible region in order to open or close the opening (9).

9. Positioning device according to at least one of Claims 6 to 8, **characterized in that** the opening (9) is determined by two opposing surfaces which are formed at a defined angle with respect to the direction of extension of the web (8), these surfaces being in contact with each other when the opening (9) is closed.

10. Positioning device according to at least one of Claims 3 to 9, **characterized in that** the fixing section (7), the web (8) and the centring section (1) are formed of plastic in one piece.

11. Positioning device according to at least one of Claims 2 to 10, **characterized in that** the centring section (1) is substantially tubular in form.

12. Positioning device according to at least one of Claims 2 to 11, **characterized in that** the centring section (1) has a centring bore (10a) which extends substantially perpendicular to the fixing section (7) to receive a centring device (C) of a machining tool (H).

13. Positioning device according to Claim 12, **characterized in that** the centring bore (10a) is stepped in form, a stop step being provided to limit a movement of the centring device (C) along the longitudinal axis of the centring section (1).

14. Positioning device according to at least one of Claims 2 to 13, **characterized in that** the centring section (1) is conical in form.

15. Positioning device according to at least one of Claims 2 to 14, **characterized in that** an outer surface of the centring section (1) is inclined by approx. 0.5° to the longitudinal axis.

16. Positioning device according to at least one of Claims 2 to 15, **characterized in that** the centring section (1) has a detecting device (6).

17. Positioning device according to Claim 16, **characterized in that** the detecting device (6) is a permanent magnet.

18. Positioning device according to Claim 16 or 17, **characterized in that** the detecting device (6) is accommodated in the centring bore (10a).

19. Positioning device according to one of Claims 5 to 18, **characterized in** that a centring intermediate section (1b) is provided which is connected to the centring section (1) in order to lengthen the centring section (1).

20. Positioning device according to Claim 19, **characterized in that** the centring intermediate section (1b) is tubular in form and is detachably connected to the centring section (1).

21. Positioning device according to Claim 20, **characterized in that** the tubular centring intermediate section (1b) has a conical inner surface.

22. Positioning device according to one of Claims 19 to 21, **characterized in that** the centring intermediate section (1b) has a centring insert (5) in which a centring bore (10b) is formed.

23. Positioning device according to Claim 22, **characterized in that** the centring insert (5) is detachably connected to the centring intermediate section (1b).

24. Positioning device according to at least one of Claims 1 to 23, **characterized in that** the holding device (3) extends substantially perpendicular to the fixing section (7).

25. Positioning device according to at least one of Claims 2 to 24, in which the hollow space is formed by a first panel (D) with the inner side for fixing the positioning device and by a second panel (E) which is arranged at a defined distance from the first panel (D), **characterized in that** a length of the centring section (1) is selected in such a way that the latter extends through an opening (F) in the second panel (E).

26. Positioning device according to Claim 25, in which an assembly opening with a defined diameter is formed in the second panel (E), **characterized in that** a diameter of the fixing section (7) is smaller than the defined diameter of the assembly opening.

27. Positioning device according to at least one of Claims 2 to 26, **characterized in that** at least one reinforcing rib (2) is provided between the centring section (1) and the fixing section (7).

28. Positioning device according to at least one of Claims 1 to 27, **characterized in that** the fixing section (7) is formed in substantially disk-shaped manner, in a fixing plane parallel to the inside of the hollow space (B).

29. Positioning device according to at least one of Claims 1 to 28, **characterized in that** a surface of the fixing section (7) is coated with adhesive.

30. Positioning device according to at least one of Claims 1 to 29, **characterized in that** the fixing section (7) has at least one fixing opening (4) to receive a fixing screw.

## Revendications

1. Dispositif de positionnement pour positionner au moins un câble (A), un tuyau flexible, un tube ou similaire dans une cavité (B), en particulier d'un mur creux ou d'un plafond creux, comportant un dispositif de maintien (3) pour maintenir le câble (A) ou le tube dans une zone de positionnement prédéfinie à l'intérieur de la cavité (B), caractérisé par une section de fixation (7) pour une fixation du dispositif de positionnement sur une paroi interne de la cavité (B).

2. Dispositif de positionnement selon la revendication 1, caractérisé en ce qu'une section de centrage (1) est prévue qui s'étend de la section de fixation (7), un axe longitudinale de la section de centrage (1) s'étendant perpendiculairement à la section de fixation (7).

3. Dispositif de positionnement selon la revendication 1 ou 2, caractérisé en ce que le dispositif de maintien (3) présente au moins une entretoise (8) qui est conçue dans un plan perpendiculairement à la section de fixation (7) et partant de celle-ci.

4. Dispositif de positionnement selon la revendication 3, caractérisé en ce que l'entretoise (8) est conçue essentiellement en arc.

5. Dispositif de positionnement selon la revendication 3 ou 4, caractérisé en ce qu'une surface interne de l'entretoise (8), une surface externe de la section de centrage (1) et une surface externe de la section de fixation (7) entoure la zone de positionnement.

6. Dispositif de positionnement selon au moins l'une des revendications 3 à 5, caractérisé en ce que l'entretoise (8) présente une ouverture (9), pour amener le câble (A) ou le tube à la zone de positionnement.

7. Dispositif de positionnement selon la revendication 6, caractérisé en ce que l'ouverture (9) située dans l'entretoise (8) est conçue de manière à pouvoir se fermer.

8. Dispositif de positionnement selon la revendication 6 ou 7, caractérisé en ce que l'entretoise (8) présente une zone élastique pour ouvrir ou fermer l'ouverture (9).

9. Dispositif de positionnement selon au moins l'une des revendications 6 à 8, caractérisé en ce que l'ouverture (9) est déterminée par deux surfaces opposées, qui sont conçues selon un angle prédéfini par rapport au sens d'extension de l'entretoise (8), ces surfaces étant en contact l'une avec l'autre, lorsque l'ouverture (9) est fermée.

10. Dispositif de positionnement selon au moins l'une des revendications 3 à 9, caractérisé en ce que la section de fixation (7), l'entretoise (8) et la section de centrage (1) sont conçues d'une seule pièce en matière plastique.

11. Dispositif de positionnement selon au moins l'une des revendications 2 à 10, caractérisé en ce que la section de centrage (1) est conçue essentiellement en forme de tube.

12. Dispositif de positionnement selon au moins l'une des revendications 2 à 11, caractérisé en ce que la zone de centrage (1) présente un trou de centrage (10a) qui s'étend essentiellement perpendiculairement à la section de fixation (7) pour le logement d'un dispositif de centrage (C) d'un outil d'usinage (H).

13. Dispositif de positionnement selon la revendication 12, caractérisé en ce que le trou de centrage (10a) est conçu en gradins, un gradin de butée étant prévu pour limiter un mouvement du dispositif de centrage (C) le long de l'axe longitudinal de la section de centrage (1).

14. Dispositif de positionnement selon au moins l'une des revendications 2 à 13, caractérisé en ce que la section de centrage (1) est conçue de façon conique.

15. Dispositif de positionnement selon au moins l'une des revendications 2 à 14, caractérisé en ce qu'une surface externe de la section de centrage (1) est inclinée de 0,5° environ par rapport à l'axe longitudinal.

16. Dispositif de positionnement selon au moins l'une des revendications 2 à 15, caractérisé en ce que la section de centrage (1) présente un dispositif de détection (6).

17. Dispositif de positionnement selon la revendication 16, caractérisé en ce que le dispositif de détection (6) est un aimant permanent.

18. Dispositif de positionnement selon la revendication 16 ou 17, caractérisé en ce que le dispositif de détection (6) est logé dans le trou de centrage (10a).

19. Dispositif de positionnement selon au moins l'une des revendications 5 à 18 caractérisé en ce qu'une section intermédiaire de centrage (1b) est prévue, qui est reliée à la section de centrage (1) pour prolonger la section de centrage (1).

20. Dispositif de positionnement selon la revendication 19, caractérisé en ce que la section intermédiaire de centrage (1b) est conçue en forme de tube et est reliée à la section de centrage (1).

21. Dispositif de positionnement selon la revendication 20, caractérisé en ce que la section intermédiaire de centrage en forme de tube (1b) présente une section interne conique.

22. Dispositif de positionnement selon l'une des revendications 19 à 21, caractérisé en ce que la section intermédiaire de centrage (1b) présente un insert de centrage (5) dans lequel est conçu un alésage de centrage (10b).

23. Dispositif de positionnement selon la revendication 22, caractérisé en ce que l'insert de centrage (5) est relié de façon amovible à la section intermédiaire de centrage (1b).

24. Dispositif de positionnement selon au moins l'une des revendications 1 à 23, caractérisé en ce que le dispositif de maintien (3) s'étend essentiellement perpendiculairement à la section de fixation (7).

25. Dispositif de positionnement selon au moins l'une des revendications 2 à 24, la cavité étant formée par une première plaque (D) dont le côté interne est destiné à la fixation du dispositif de positionnement et par une deuxième plaque (E) qui est disposée à une distance prédéfinie par rapport à la première plaque (D), caractérisé en ce qu'une longueur de la section de centrage (1) est choisie de manière telle que celle-ci s'étend par une ouverture (F) dans la deuxième plaque (E).

26. Dispositif de positionnement selon la revendication 25, une ouverture de montage étant conçue avec un diamètre prédéfini dans la deuxième plaque (E), caractérisé en qu'un diamètre de la section de fixation (7) est plus petit que le diamètre prédéfini de l'ouverture de montage.

27. Dispositif de positionnement selon au moins l'une des revendications 2 à 26, caractérisé en ce qu'au moins une nervure de renforcement (2) est prévue entre la section de centrage (1) et la section de fixation (7).

28. Dispositif de positionnement selon au moins l'une des revendications 1 à 27, caractérisé en ce que la section de fixation (7) est conçue essentiellement en forme de disque, dans un plan de fixation parallèlement au côté interne de la cavité (B).

29. Dispositif de positionnement selon au moins l'une des revendications 1 à 28, caractérisé en ce qu'une surface de la section de fixation (7) est enduite de colle.

30. Dispositif de positionnement selon au moins l'une des revendications 1 à 29, caractérisé en ce que la section de fixation (7) présente au moins une ouverture de fixation (4) pour loger une vis de fixation.
